# EUROPÄISCHE PATENTANMELDUNG

(11) **EP 2 434 734 A1**
(43) Veröffentlichungstag der Anmeldung: **28.03.2012**
(21) Anmeldenummer: 11007691.6
(22) Anmeldetag: 21.09.2011
(51) Int. Cl.: H04M 1/66, G07C 9/00

(54) **Endgerät zur Nutzung in einem Mobilfunknetz und Verfahren zum Betrieb desselben in einem Mobilfunknetz**

(30) Priorität: 22.09.2010 DE 102010046035
(71) Anmelder: Vodafone Holding GmbH, 40213 Düsseldorf (DE)
(72) Erfinder: Post, Guido Dr., 52134 Herzogenrath (DE); Weingart, Peter, 44799 Bochum (DE); Meyer, Sascha, 44289 Dortmund (DE)
(74) Vertreter: Ring & Weisbrodt

(57) **Zusammenfassung**

Die vorliegende Erfindung betrifft ein Endgerät (1) zur Nutzung in einem Mobilfunknetz (10), insbesondere gemäß einem GSM-, GPRS-, UMTS- und/oder LTE-Funknetzstandard, mit einer Anzeigeeinrichtung (2) zur optischen, akustischen und/oder mechanischen Wiedergabe von Informationen repräsentierenden Signalen, einer Eingabeeinrichtung (3) mit Eingabemitteln zur optischen, akustischen und/oder mechanischen Erfassung von Informationen und/oder Steuereingaben repräsentierenden Signalen durch Betätigung wenigstens eines der Eingabemittel und einer Einrichtung (4) zur Erfassung wenigstens einer biometrischen Information eines Nutzers (8) des Endgerätes (1), welches dadurch gekennzeichnet ist, dass die Einrichtung (4) zur Erfassung der wenigstens einen biometrischen Information eines Nutzers (8) des Endgerätes (1) zur Authentifikation von Nutzungen von Funktionen und/oder Anwendungen des Endgerätes (1) und/oder von mit dem Endgerät (1) über ein Mobilfunknetz (10) nutzbaren Diensten und/oder Anwendungen nutzbar ist und von der Eingabeeinrichtung (3) als Eingabemittel zur Erfassung von Steuereingaben repräsentierenden Signalen nutzbar ist. Gegenstand der vorliegenden Erfindung sind ferner Verfahren zum Betrieb eines erfindungsgemäßen Endgerätes (1) in einem Mobilfunknetz (10).

## Beschreibung

Die vorliegende Erfindung betrifft ein Endgerät zur Nutzung in einem Mobilfunknetz, insbesondere gemäß einem GSM-, GPRS-, UMTS- und/oder LTE-Funknetzstandard, mit einer Anzeigeeinrichtung zur optischen, akustischen und/oder mechanischen Wiedergabe von Informationen repräsentierenden Signalen, einer Eingabeeinrichtung mit Eingabemitteln zur optischen, akustischen und/oder mechanischen Erfassung von Informationen und/oder Steuereingaben repräsentierenden Signalen durch Betätigung wenigstens eines der Eingabemittel und einer Einrichtung zur Erfassung wenigstens einer biometrischen Information eines Nutzers des Endgerätes. Ein derartiges Endgerät wird beispielsweise seitens der DE 20 2005 002 694 U1 offenbart.

Ferner betrifft die vorliegende Erfindung ein Verfahren zum Betrieb eines erfindungsgemäßen Endgerätes in einem Mobilfunknetz.

Die Menge an persönlichen, vertraulichen bzw. geheim zu haltenden Informationen und/oder Daten eines Nutzers eines in einem Mobilfunknetz nutzbaren Endgerätes nehmen kontinuierlich zu, insbesondere aufgrund der gesteigerten Leistungsfähigkeiten entsprechender Endgeräte hinsichtlich Speicherkapazität und Rechenleistung sowie aufgrund von von entsprechenden Mobilfunknetzen bereitgestellten gesteigerten Dienstnutzungsmöglichkeiten, wie insbesondere über ein Mobilfunknetz nutzbare Internet-Dienste.

Entsprechende persönliche, vertrauliche bzw. geheim zu haltende Informationen und/oder Daten eines Nutzers eines in einem Mobilfunknetz nutzbaren Endgerätes bedürfen insofern eines Schutzes vor einem Zugriff durch nicht Berechtigte. Darüber hinaus ist der Zugang zu bzw. der Zugriff auf mit dem Endgerät über ein Mobilfunknetz nutzbaren Diensten und/oder Anwendungen vor unberechtigten und/oder missbräuchlichen Nutzungen zu vermeiden.

Im Stand der Technik sind zahlreiche Verfahren und Systeme bekannt, die insbesondere zur Authentifikation bzw. Autorisierung von Nutzern zum Einsatz kommen. Die Authentifikation der Nutzer kann dabei je nach Ausgestaltung der Authentifikation auf fünf unterschiedliche Arten erfolgen. Dabei werden die Identitäten der jeweiligen Nutzer hinsichtlich der diese definierenden Eigenschaften im Rahmen der Authentifikation überprüft. Unterschieden wird dabei nach Wissen, nach Besitz und/oder biometrischen Merkmalen. Eine Authentifikation kann dabei auf fünf verschiedenen Wegen erfolgen, die miteinander kombinierbar sind:
1. Man hat etwas, beispielsweise einen Schlüssel, eine Karte oder dergleichen Kennung.
2. Man weiß etwas, beispielsweise ein Passwort.
3. Man ist etwas oder wer, beispielsweise Überprüfung biologischer bzw. biometrischer Eigenschaften von Personen hinsichtlich Fingerabdrücken, Gesichts- und/oder Stimmencharakteristika.
4. Man ist an einem bestimmen Ort, beispielsweise in einer bestimmten Funkzelle in einem zellularen Mobilfunknetz.
5. Man kann etwas, vorzugsweise etwas individuelles; beispielsweise die Unterschriftsleistung einer Person.

Bei Kombination von zwei dieser Möglichkeiten liegt eine sogenannte 2-Faktor-Authentifikation vor, wie sie beispielsweise im Zusammenhang mit in zellularen Mobilfunknetzen betreibbaren mobilen Endgeräten nutzbaren SIM und der beziehungsweise den jeweils zugehörigen PIN beziehungsweise PINs gegeben ist.

Derartige Verfahren und Systeme kommen beispielsweise im Bereich von zellularen Mobilfunknetzen umfangreich zum Einsatz, beispielsweise im Zusammenhang mit in einem Mobilfunknetz nutzbaren Endgeräten. Dabei wird der Zugang zum Mobilfunknetz über ein von dem Endgerät genutztes Mobilfunkteilnehmeridentifikationsmodul, dem sogenannten SIM (SIM: Subscriber Identity Modul) realisiert, welches dazu in der Regel in in Mobilfunknetzen betreibbare Endgeräte eingesetzt wird. Neben einer seitens eines entsprechenden SIM gegebenen spezifischen und in der Regel eindeutigen Kennung erfordert ein Zugriff auf bzw. in das Mobilfunknetz zusätzlich die Eingabe einer persönlichen Identifikationsnummer bzw. eines numerischen Zugangscodes, einer sogenannten PIN (PIN: Personal Identity Number) seitens des die SIM nutzenden Endgerätes durch den Nutzer des Endgerätes. Die entsprechende PIN wird dabei in der Regel nach Aufforderung von dem Nutzer des Endgerätes seitens des Endgerätes mittels einer in der Regel verschiedene Tasten als Eingabemittel aufweisenden Eingabeeinrichtung durch Betätigung der Tasten erfasst. Diese Lösungen sind vor allem eingeführt worden, um eine Gebührenabrechnung zwischen Nutzern und Mobilfunknetzbetreibern eindeutig und sicher zu machen. Darüber hinaus werden zum Schutze der Nutzerdaten innerhalb eines mobilen Endgerätes zusätzliche oben beschriebene Lösungen eingesetzt, wie zum Beispiel ein Passwortschutz, um den Zugang zur Benutzerschnittstelle des im Betrieb befindlichen Endgerätes zu gewähren.

Insbesondere im Zusammenhang mit Rechnernetzwerken wie dem Internet oder einem Intranet, sind zahlreiche einen Zugang zu dem Rechnernetz ermöglichende Authentifikationsverfahren und/oder -systeme bekannt, wobei die von Nutzern entsprechend verwendeten Identitäten in unterschiedlichster Form und auf unterschiedlichste Art und Weise erzeugt sind beziehungsweise werden. Ein Zugriff eines menschlichen Nutzers auf Daten und/oder Dienste einer Datenendeinrichtung in einem Rechnernetz erfolgt von einer an das Rechnernetz angeschlossenen Datenendeinrichtung des Nutzers in der Regel unter Verwendung einer Identität, welche in der Regel aus einem Nutzernamen und einem dem Nutzernamen zugeordneten geheimen Passwort besteht. Ein Zugriff auf die Daten und/oder Dienste der diese bereitstellenden Datenendeinrichtung wird von dieser bei durch den Nutzer erfolgender Eingabe von Nutzername und geheimen Passwort ermöglicht. Dazu sind seitens der die Daten und/oder Dienste bereitstellenden Datenendeinrichtung der Nutzername und das dem Nutzername zugeordnete geheime Passwort gespeichert. Bei Zugriffsanforderung des Nutzers werden der von dem Nutzer eingegebene Nutzername und das von dem Nutzer eingegebene geheime Passwort seitens der die Daten und/oder Dienste bereitstellenden Datenendeinrichtung mit dem seitens der die Daten und/oder Dienste bereitstellenden Datenendeinrichtung erfassten Nutzername und Passwort verglichen und bei Übereinstimmung dem Nutzer beziehungsweise der dem Nutzer zugeordneten Datenendeinrichtung ein Zugriff auf die Daten und/oder Dienste ermöglicht.

Zur Verbesserung und/oder Vereinfachung der Authentifikation sind im Stand der Technik ferner Einrichtungen zur Erfassung biometrischer Informationen einer Person, insbesondere sogenannte Fingerabdruckscanner, bekannt, mit welchen die Identität eines Nutzers eines Endgerätes mit den in einer Datenbank enthaltenen entsprechenden biometrischen Informationen des Nutzers abgeglichen werden. Zur Erfassung biometrischer Informationen eines Nutzers kommen neben Fingerabdrücken jedoch auch andere biometrische Charakteristika in Frage, unter anderem die Handgeometrie, die Iris (Regenbogenhaut), die Gesichtsgeometrie und/oder dergleichen biometrische Charakteristika eines Nutzers.

Seitens in einem Mobilfunknetz nutzbarer Endgeräte, insbesondere Mobilfunktelefonen, ist der zur Verfügung stehende Raum für eine Eingabeeinrichtung mit Eingabemitteln zur Erfassung von Informationen und/oder Steuereingaben beschränkt. So weisen Mobilfunktelefone in der Regel eine Tastatur mit verschiedenen Tasten als Eingabemitteln einer Eingabeeinrichtung auf. Die Tastatur kann dabei auch als eine berührungsempfindliche Fläche, einem sogenannten Touchpad bzw. Tastfeld, ausgebildet sein. In der Regel weist eine solche Eingabeeinrichtung ein Eingabemittel auf, welches eine seitens der Anzeigeeinrichtung des Endgerätes wiedergegebene Eingabemarkierung zur Erfassung von Steuereingaben positioniert und/oder selektiert, das heißt insbesondere zur Steuerung von Anwendungen und/oder deren Funktionen aktiviert. Derartige Eingabemittel einer Eingabeeinrichtung sind im Stand der Technik als sogenannte Menünavigationssteuerungen bekannt, beispielsweise sogenannte 4-Way Navigation Control und/oder dergleichen. Die zusätzliche Integration einer Einrichtung zur Erfassung wenigstens einer biometrischen Information eines Nutzers des Endgerätes, insbesondere ein sogenannter Fingerabdruckscanner, seitens entsprechender in einem Mobilfunknetz nutzbarer Endgeräte, insbesondere Mobilfunktelefone, ist angesichts der beschränkten räumlichen Abmessungen der Endgeräte schwierig und insbesondere derart, dass die Handhabung für den Nutzer in der Regel unbefriedigend und umständlich ist.

Der vorliegenden Erfindung liegt in Anbetracht dieses Standes der Technik die **Aufgabe** zugrunde, ein Endgerät der eingangs genannten Art zur Nutzung in einem Mobilfunknetz bereitzustellen, welches eine vereinfachte Handhabung hinsichtlich Authentifikation des Nutzers und der Erfassung von Steuereingaben auf kostengünstige und einfache Art und Weise ermöglicht.

Zur technischen **Lösung** wird mit der vorliegenden Erfindung ein Endgerät zur Nutzung in einem Mobilfunknetz, insbesondere gemäß einem GSM-, GPRS-, UMTS- und/oder LTE-Funknetzstandard, mit einer Anzeigeeinrichtung zur optischen, akustischen und/oder mechanischen Wiedergabe von Informationen repräsentierenden Signalen, einer Eingabeeinrichtung mit Eingabemitteln zur optischen, akustischen und/oder mechanischen Erfassung von Informationen und/oder Steuereingaben repräsentierenden Signalen durch Betätigung wenigstens eines der Eingabemittel und einer Einrichtung zur Erfassung wenigstens einer biometrischen Information eines Nutzers des Endgerätes vorgeschlagen, welches dadurch gekennzeichnet ist, dass die Einrichtung zur Erfassung der wenigstens einen biometrischen Information des Nutzers des Endgerätes zur Authentifikation von Nutzungen von Funktionen und/oder Anwendungen des Endgerätes und/oder von mit dem Endgerät über ein Mobilfunknetz nutzbaren Diensten und/oder Anwendungen nutzbar ist und von der Eingabeeinrichtung als Eingabemittel zur Erfassung von Steuereingaben repräsentierenden Signalen nutzbar ist.

Der Erfindung liegt die Erkenntnis zugrunde, dass bei Nutzung der Einrichtung zur Erfassung wenigstens einer biometrischen Information eines Nutzers des Endgerätes als ein von der Eingabeeinrichtung zur Erfassung von Steuereingaben repräsentierenden Signalen nutzbares Eingabemittel die Handhabung eines in einem Mobilfunknetz nutzbaren Endgerätes sowohl hinsichtlich Authentifikation als auch hinsichtlich der Erfassung von Steuereingaben für den Nutzer verbesserbar ist.

Erfindungsgemäß ist vorteilhafterweise eine Erfassung von Steuereingaben repräsentierenden Signalen erst nach einer entsprechenden Authentifikation ermöglicht.

In einer vorteilhaften Ausgestaltung der Erfindung ist die Einrichtung zur Erfassung der wenigstens einen biometrischen Information eines Nutzers des Endgerätes von der Eingabeeinrichtung als Eingabemittel zur Erfassung von Steuereingaben repräsentierenden Signalen zur Positionierung und/oder Selektion einer seitens der Anzeigeeinrichtung wiedergegebenen Eingabemarkierung, beispielsweise einem sogenannten Cursor oder sogenanntem Mauszeiger, nutzbar. Die Einrichtung zur Erfassung der wenigstens einen biometrischen Information eines Nutzers des Endgerätes ermöglicht dabei vorteilhafterweise eine Navigation und/oder Auswahl durch ein Menü einer seitens des Endgerätes ausgeführten Anwendung bzw. Teilanwendung oder/oder deren Funktionen.

Vorteilhafterweise ist die Einrichtung zur Erfassung der wenigstens einen biometrischen Information eines Nutzers des Endgerätes ein Scanner zur Erfassung von Fingerabdrücken, Handgeometrien, Gesichtsgeometrien, Iris und/oder dergleichen. Bei erfindungsgemäßer Verwendung eines sogenannten Fingerabdruckscanners als Einrichtung zur Erfassung wenigstens einer biometrischen Information eines Nutzers des Endgerätes und erfindungsgemäßer Nutzung des Fingerabdruckscanners zur Erfassung von Steuereingaben repräsentierenden Signalen zur Positionierung und/oder Selektion einer seitens der Anzeigeeinrichtung wiedergegebenen Eingabemarkierung wird die Handhabung des Endgerätes hinsichtlich Authentifikation und Steuereingaben in einer besonders bevorzugten Ausgestaltung der Erfindung dadurch verbessert, dass entsprechende Steuereingaben jeweils erst nach einer entsprechenden Authentifikation des Fingerabdrucks ermöglicht werden. Eine entsprechende Authentifikation erfolgt vorteilhafterweise automatisch bei erfolgenden Steuereingaben mittels der Einrichtung zur Erfassung der wenigstens einen biometrischen Information des Nutzers des Endgerätes.

Eine weitere Ausgestaltung der Erfindung ist dadurch gekennzeichnet, dass die Eingabeeinrichtung ein eine berührungssensitive Fläche bereitstellendes Tastfeld als Eingabemittel zur Erfassung von Informationen und/oder Steuereingaben repräsentierenden Signalen aufweist oder ist.

Eine besonders vorteilhafte Ausgestaltung der Erfindung ist dadurch gekennzeichnet, dass die Eingabeeinrichtung ein eine optisch berührungssensitive Fläche bereitstellendes Tastfeld, ein sogenanntes Optical Touchpad oder einen optischen Mauszeiger, als Eingabemittel zur Erfassung von Informationen und/oder Steuereingaben repräsentierenden Signalen aufweist oder ist. Bei einem entsprechenden Optical Touchpad oder optischen Mauszeiger ist dabei eine haptische bzw. mechanische Berührung des Eingabemittels der Eingabeeinrichtung vorteilhafterweise entbehrlich, da schon das Vorhandensein des Fingers bzw. des stiftartigen Eingabemittels in einem vor dem flächenartigen Eingabemittel der Eingabeeinrichtung liegenden Bereich erfasst wird, beispielsweise mit einem Satz von Licht-Transceivern, welche eine Infrarot-Lesequelle und Sensoren umfassen. Ferner können vorteilhafterweise laserbasierte oder kapazitive Lösungen zum Einsatz kommen, insbesondere sogenannte Optical Navigation Keys bei laserbasierten Lösungen oder sogenannte Gesture Recognition bei kapazitiven Lösungen. Die Position des Fingers bzw. stiftartigen Eingabemittels wird dabei durch trigonometrische Algorithmen bestimmt.

In einer weiteren vorteilhaften Ausgestaltung der Erfindung ist die Einrichtung zur Erfassung der wenigstens einen biometrischen Information eines Nutzers des Endgerätes in der berührungssensitiven bzw. in der optisch berührungssensitiven Fläche des Tastfeldes integriert. Hierdurch wird insbesondere der seitens des Endgerätes zur Verfügung stehende Raum besser nutzbar bzw. das Endgerät hinsichtlich seiner räumlichen Abmessungen verkleinerbar.

In einer weiteren vorteilhaften Ausgestaltung der Erfindung ist die Einrichtung zur Erfassung der wenigstens einen biometrischen Information eines Nutzers des Endgerätes von der berührungssensitiven bzw. von der optisch berührungssensitiven Fläche des Tastfeldes ausgebildet oder bereitgestellt.

Vorteilhafterweise ist das Endgerät ein mobiles Endgerät, vorzugsweise ein Mobilfunktelefon.

Zur technischen **Lösung** der eingangs genannten Aufgabe wird mit der vorliegenden Erfindung ferner ein Verfahren zum Betrieb eines in einem Mobilfunknetz nutzbaren erfindungsgemäßen Endgerätes vorgeschlagen, welches gekennzeichnet ist durch die nachfolgenden Verfahrensschritte:
- Erfassung wenigstens einer biometrischen Information eines Nutzers des Endgerätes mittels der Einrichtung zur Erfassung wenigstens einer biometrischen Information eines Nutzers des Endgerätes;
- Vergleich der wenigstens einen mittels der Einrichtung zur Erfassung wenigstens einer biometrischen Information eines Nutzers des Endgerätes erfassten biometrischen Information des Nutzers des Endgerätes mit in wenigstens einer Datenbank verwalteten biometrischen Informationen von wenigstens einem Nutzer des Endgerätes;
- Authentifikation von Nutzungen von Funktionen und/oder Anwendungen des Endgerätes und/oder von mit dem Endgerät über das Mobilfunknetz nutzbaren Diensten und/oder Anwendungen bei Übereinstimmung der wenigstens einen mittels der Einrichtung zur Erfassung wenigstens einer biometrischen Information eines Nutzers des Endgerätes erfassten biometrischen Information des Nutzers des Endgerätes mit wenigstens einer in der Datenbank verwalteten biometrischen Information von wenigstens einem Nutzer des Endgerätes;
- Erfassung von Steuereingaben repräsentierenden Signalen zur Positionierung und/oder Selektion einer seitens der Anzeigeeinrichtung des Endgerätes wiedergegebenen Eingabemarkierung mittels der Einrichtung zur Erfassung wenigstens einer biometrischen Information eines Nutzers des Endgerätes; und
- Positionierung und/oder Selektion der seitens der Anzeigeeinrichtung des Endgerätes wiedergegebenen Eingabemarkierung in Abhängigkeit von dem mittels der Einrichtung zur Erfassung wenigstens einer biometrischen Information eines Nutzers des Endgerätes erfassten Steuereingaben repräsentierenden Signale.

Vorteilhafterweise wird das erfindungsgemäße Verfahren zur Authentifikation des Nutzers des erfindungsgemäßen Endgerätes eingesetzt.

Vorteilhafterweise wird das erfindungsgemäße Verfahren ausschließlich seitens des erfindungsgemäßen Endgerätes ausgeführt. Dementsprechend ist die wenigstens eine biometrische Informationen von wenigstens einem Nutzer des Endgerätes verwaltende Datenbank seitens des Endgerätes vorgesehen.

Zur technischen **Lösung** der eingangs genannten Aufgabe wird mit der vorliegenden Erfindung ferner ein Verfahren zum Betrieb eines in einem Mobilfunknetz nutzbaren erfindungsgemäßen Endgerätes vorgeschlagen, welches gekennzeichnet ist durch die nachfolgenden Verfahrensschritte:
- Erfassung wenigstens einer biometrischen Information eines Nutzers des Endgerätes mittels der Einrichtung zur Erfassung wenigstens einer biometrischen Information eines Nutzers des Endgerätes;
- Sendung der wenigstens einen mittels der Einrichtung zur Erfassung wenigstens einer biometrischen Information eines Nutzers des Endgerätes erfassten biometrischen Information des Nutzers des Endgerätes von dem Endgerät an das Mobilfunknetz;
- Empfang der wenigstens einen von dem Endgerät an das Mobilfunknetz gesendeten erfassten biometrischen Information des Nutzers des Endgerätes seitens des Mobilfunknetzes;
- Vergleich der wenigstens einen empfangenen biometrischen Information des Nutzers des Endgerätes mit in wenigstens einer Datenbank des Mobilfunknetzes oder einer über das Mobilfunknetz erreichbaren Datenbank verwalteten biometrischen Informationen von wenigstens einem Nutzers wenigstens eines Endgerätes;
- Authentifikation von Nutzungen von mit dem Endgerät über das Mobilfunknetz nutzbaren Diensten und/oder Anwendungen bei Übereinstimmung der wenigstens einen empfangenen biometrischen Information des Nutzers des Endgerätes mit einer in der Datenbank verwalteten biometrischen Information von wenigstens einem Nutzer wenigstens eines Endgerätes;
- Erfassung von Steuereingaben repräsentierenden Signalen zur Positionierung und/oder Selektion einer seitens der Anzeigeeinrichtung des Endgerätes wiedergegebenen Eingabemarkierung mittels der Einrichtung zur Erfassung wenigstens einer biometrischen Information eines Nutzers des Endgerätes; und
- Positionierung und/oder Selektion der seitens der Anzeigeeinrichtung des Endgerätes wiedergegebenen Eingabemarkierung in Abhängigkeit von den mittels der Einrichtung zur Erfassung wenigstens einer biometrischen Information eines Nutzers des Endgerätes erfassten Steuereingaben repräsentierenden Signale.

Bei diesem erfindungsgemäßen Verfahren ist die biometrische Information von wenigstens einem Nutzer wenigstens eines Endgerätes verwaltende Datenbank seitens des Mobilfunknetzes vorgesehen. Die Authentifikation erfolgt durch Senden bzw. Empfangen der für die Authentifikation erforderlichen Informationen über das Mobilfunknetz. Dabei wird die wenigstens eine biometrische Information des Nutzers des Endgerätes seitens des Endgerätes erfasst und von dem Endgerät an das Mobilfunknetz gesendet, das heißt der Nutzer authentisiert sich gegenüber dem Mobilfunknetz bzw. der Datenbankanwendung des Mobilfunknetzes. Das Mobilfunknetz bzw. die Datenbankanwendung vergleicht dann die entsprechend empfangene biometrische Information mit den in der Datenbank verwalteten biometrischen Informationen. Bei Übereinstimmung der biometrischen Informationen erfolgt im Rahmen der Authentifikation eine Authentifizierung, wobei das Mobilfunknetz bzw. die Datenbankanwendung des Mobilfunknetzes eine entsprechende Authentifizierungsinformation über das Mobilfunknetz an das Endgerät des Nutzers sendet. Das Endgerät empfängt dann eine entsprechende Authentifizierungsinformation und ermöglicht dann eine Erfassung von Steuereingaben des Endgerätes zur Positionierung oder Selektion der seitens der Anzeigeeinrichtung wiedergegebenen Eingabemarkierung.

Vorteilhafterweise wird das erfindungsgemäße Verfahren zur Authentifikation des Nutzers des erfindungsgemäßen Endgerätes eingesetzt.

Vorteilhafterweise sind die erfindungsgemäßen Verfahren gekennzeichnet durch eine Identifikation des Nutzers des Endgerätes gegenüber dem Mobilfunknetz für einen Zugang zum Mobilfunknetz, durch einen Zugang zu bzw. Zugriff auf Funktionen und/oder Anwendungen des Endgerätes und/oder durch einen Zugang zu bzw. Zugriff auf von mit dem Endgerät über das Mobilfunknetz nutzbaren Diensten und/oder Anwendungen als authentifizierende Nutzungen. Für den Nutzer des erfindungsgemäßen Endgerätes wird so die Handhabung weiter vereinfacht, insbesondere da die Eingabe der sogenannten PIN entfallen kann.

Gemäß einer weiteren vorteilhaften Ausgestaltung der Erfindung sind die erfindungsgemäßen Verfahren gekennzeichnet durch einen Zugang zu bzw. Zugriff auf sogenannte soziale Netzwerk-, E-Mail- und/oder sonstige Internet-Dienste, welche einen Zugang durch eine Benutzerkennung vorsehen, als von mit dem Endgerät über das Mobilfunknetz nutzbaren Dienst bzw. nutzbare Anwendung.

Gemäß einer weiteren vorteilhaften Ausgestaltung der Erfindung sind die erfindungsgemäßen Verfahren gekennzeichnet durch einen Zugang zu bzw. Zugriff auf seitens des Endgerätes gespeicherten persönlichen, vertraulichen und/oder geheim zu haltenden Informationen und/oder Daten des Nutzers des Endgerätes als Funktionen und/oder Anwendungen des Endgerätes.

Weitere Einzelheiten, Merkmale und Vorteile der Erfindung werden nachfolgend anhand der in den Figuren der Zeichnung dargestellten Ausführungsbeispiele der Erfindung näher erläutert. Dabei zeigen:
Fig.1 in einer schematischen Prinzipdarstellung ein Ausführungsbeispiel für ein erfindungsgemäßes Endgerät;
Fig. 2a in einer schematischen Prinzipdarstellung einen ersten Verfahrensschritt eines Ausführungsbeispiels eines erfindungsgemäßen Verfahrens;
Fig. 2b in einer schematischen Prinzipdarstellung einen zweiten Verfahrensschritt des Ausführungsbeispiels eines erfindungsgemäßen Verfahrens nach Fig. 2a;
Fig. 2c in einer schematischen Prinzipdarstellung einen dritten Verfahrensschritt eines Ausführungsbeispiels eines erfindungsgemäßen Verfahrens nach Fig. 2a und 2b;
Fig. 2d in einer schematischen Prinzipdarstellung einen vierten und fünften Verfahrensschritt eines Ausführungsbeispiels eines erfindungsgemäßen Verfahrens eines erfindungsgemäßen Verfahrens nach Fig. 2a bis 2c; und
Fig. 3 in einer schematischen Prinzipdarstellung ein weiteres Ausführungsbeispiel eines erfindungsgemäßen Verfahrens.

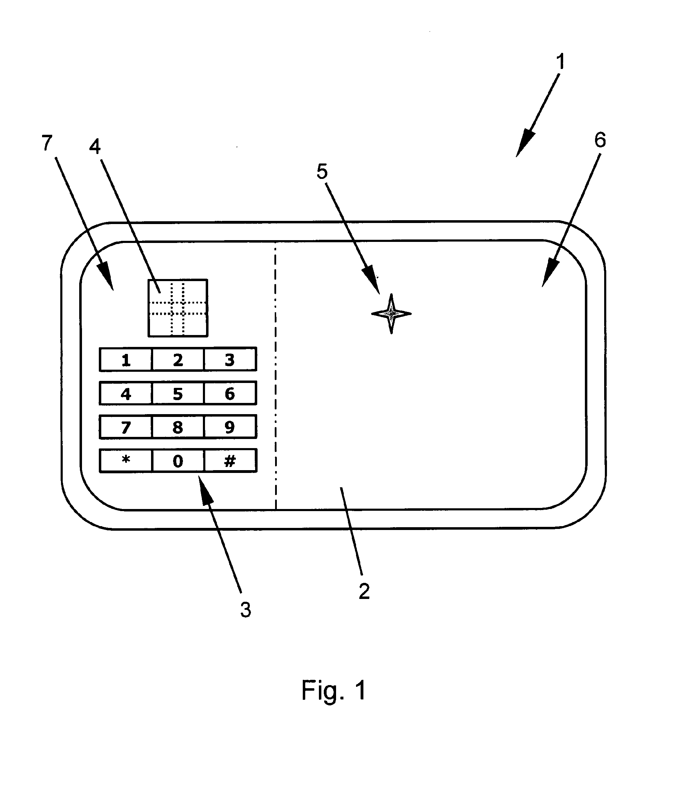

Fig. 1 zeigt ein mobiles Endgerät 1, welches zur Nutzung in einem Mobilfunknetz 10 (in Fig. 1 nicht dargestellt) gemäß einem GSM-, GPRS-, UMTS- und/oder LTE-Funknetzstandard ausgebildet und/oder eingerichtet ist. Das mobile Endgerät 1 ist dabei vorliegend als Mobilfunktelefon 1 ausgestaltet. Das Endgerät 1 weist eine Anzeigeeinrichtung 2 und eine Eingabeeinrichtung 3 auf. Die Anzeigeeinrichtung 2 dient zur optischen, akustischen und/oder mechanischen Wiedergabe von Informationen repräsentierenden Signalen. Die Eingabeeinrichtung 3 weist Eingabemittel zur optischen, akustischen und/oder mechanischen Erfassung von Informationen und/oder Steuereingaben repräsentierenden Signalen durch Betätigung wenigstens eines der Eingabemittel auf. Eingabemittel der Eingabeeinrichtung 3 sind dabei insbesondere Tasten und/oder nach Art von Tasten ausgebildete Tastfelder. Ferner weist das mobile Endgerät 1 eine Einrichtung 4 zur Erfassung biometrischer Informationen auf, welche vorliegend nach Art eines Fingerabdruckscanners 4 ausgebildet ist. Die Einrichtung 4 zur Erfassung der wenigstens einer biometrischen Information eines Nutzers 8 (in Fig. 1 nicht dargestellt) des Endgerätes 1 ermöglicht vorliegend insbesondere eine Erfassung von Fingerabdrücken und/oder Handgeometrien sowie eine Erfassung von Bewegungen derselben.

Bei dem in Fig. 1 dargestellten mobilen Endgerät 1 sind die Anzeigeeinrichtung 2, die Eingabeeinrichtung 3 und die Einrichtung 4 zur Erfassung biometrischer Informationen gemeinsam von bzw. mit einem sogenannten Touchscreen ausgebildet, welches eine berührungssensitive bzw. optisch berührungssensitive Fläche für Anzeigen und für Eingaben bereitstellt. Das Touchscreen ist vorliegend ausgebildet, die Anwesenheit, Lage und Bewegung einer Berührung des Touchscreens durch einen Nutzer 8 (in Fig. 1 nicht dargestellt) des Endgerätes 1 im Anzeigebereich 6 und im Bildbereich 7 erkennen und wiedergeben zu können. Die Berührung kann dabei mit einem Finger, einer Hand oder anderen, passiven Objekten, zum Beispiel einem Stift oder dergleichen, erfolgen. Die Einrichtung 4 zur Erfassung biometrischer Informationen ist vorliegend in der berührungssensitiven bzw. in der optisch berührungssensitiven Fläche des Touchscreen integriert.

Bei dem mobilen Endgerät 1 ist die Einrichtung 4 zur Erfassung biometrischer Informationen eines Nutzers 8 (in Fig. 1 nicht dargestellt) des Endgerätes 1 ausgebildet und/oder eingerichtet eine Authentifikation von Funktionen und/oder Anwendungen des Endgerätes 1 und/oder eine Authentifikation von mit dem Endgerät über ein Mobilfunknetz 10 (in Fig. 1 nicht dargestellt) nutzbaren Diensten und/oder Anwendungen zu ermöglichen. Ferner ist bei dem mobilen Endgerät 1 die Einrichtung 4 zur Erfassung biometrischer Informationen eines Nutzers 8 (in Fig. 1 nicht dargestellt) des Endgerätes 1 als Eingabemittel zur Erfassung von Steuereingaben repräsentierenden Signalen ausgebildet und/oder eingerichtet, welches von der Eingabeeinrichtung 3 nutzbar ist, insbesondere von Steuereingaben zur Positionierung und/oder Selektion einer seitens der Anzeigeeinrichtung 2 wiedergegebenen Eingabemarkierung 5 (auch Cursor 5 genannt), welche in den Figuren 5 symbolisch durch einen Stern dargestellt ist.

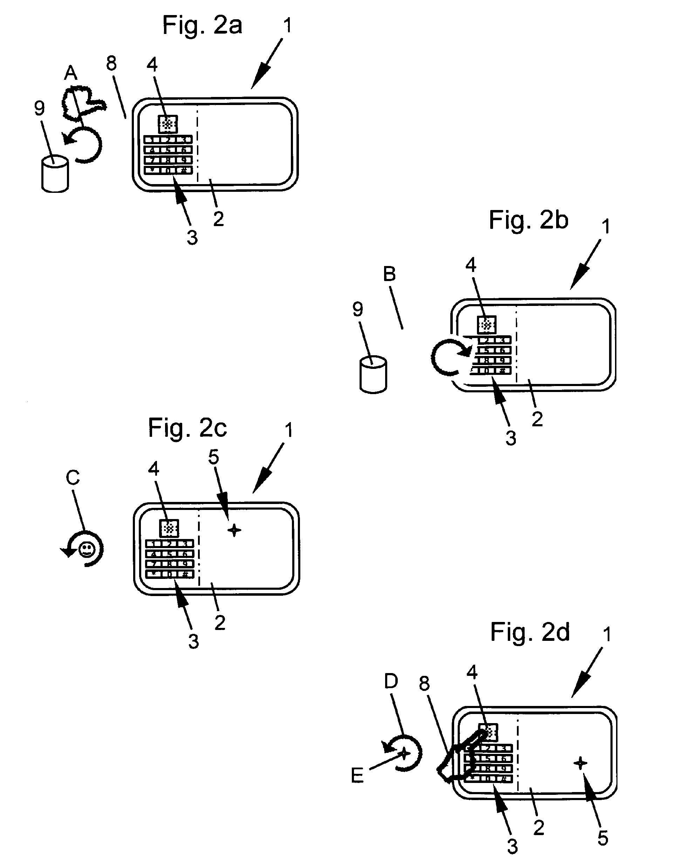

Fig. 2a bis 2d zeigen ein Ausführungsbeispiel eines Verfahrens zum Betrieb eines Endgerätes 1 nach Fig. 1 in einem Mobilfunknetz 10 (in Fig. 2a bis 2d nicht dargestellt) gemäß einem GSM-, GPRS , UMTS- und/oder LTE-Funknetzstandard.

In dem in Fig. 2a dargestellten Verfahrensschritt A werden seitens des Endgerätes 1 mittels der Einrichtung 4 zur Erfassung biometrischer Informationen eines Nutzers 8 des Endgerätes 1 biometrische Informationen, vorliegend wenigstens ein Fingerabdruck, des Nutzers 8 des Endgerätes 1 erfasst und in einer Speichereinrichtung bzw. Datenbank 9 des Endgerätes 1 gespeichert.

In dem in Fig. 2b dargestellten Verfahrensschritt B erfolgt seitens des Endgerätes 1 ein Vergleich der mittels der Einrichtung 4 zur Erfassung biometrischer Information des Nutzers 8 des Endgerätes 1 aktuell erfassten biometrischen Informationen mit in der oder einer weiteren Speichereinrichtung bzw. Datenbank 9 des Endgerätes 1 verwalteten biometrischen Informationen des Nutzer 8 des Endgerätes 1, welche der Nutzer 8 zu einem vorhergehenden Zeitpunkt beispielsweise im Rahmen einer Einrichtung des Endgerätes 1 seitens des Endgerätes 1 erfasst bzw. hinterlegt hat.

Bei Übereinstimmung der aktuell in Verfahrensschritt B erfassten biometrischen Information des Nutzers 8 des Endgerätes 1 mit der zuvor in der oder einer weiteren Speichereinrichtung bzw. Datenbank 9 des Endgerätes 1 erfassten bzw. hinterlegten biometrischen Information des Nutzer 8 des Endgerätes 1 erfolgt in Verfahrensschritt C eine Authentifikation von Nutzungen von Funktionen und/oder Anwendungen des Endgerätes 1 und/oder von mit dem Endgerät 1 über das Mobilfunknetz 10 (in Fig. 2a bis 2c nicht dargestellt) nutzbaren Diensten und/oder Anwendungen. Eine bei Übereinstimmung der aktuell erfassten biometrischen Informationen des Nutzers 8 des Endgerätes 1 mit zuvor erfassten bzw. hinterlegten biometrischen Informationen des Nutzers 8 des Endgerätes 1 gegebene positive Authentifikation ist in Fig. 2c symbolisch durch einen sogenannten Smiley dargestellt. Die Authentifikation bewirkt eine Freigabe von Nutzungen von Funktionen und/oder Anwendungen des Endgerätes 1 und/oder von mit dem Endgerät 1 über das Mobilfunknetz 10 (in Fig. 2a bis 2c nicht dargestellt) nutzbaren Diensten und/oder Anwendungen. Die Freigabe ist in Fig. 2c symbolisch durch die dann in bzw. auf der Anzeigeeinrichtung 2 des Endgerätes 1 wiedergegebene Eingabemarkierung 5 dargestellt. Die durch Authentifikation freizugebenden Nutzungen von Funktionen und/oder Anwendungen des Endgerätes 1 und/oder die durch Authentifikation freizugebenden mit dem Endgerät 1 über das Mobilfunknetz 10 (in Fig. 2a bis 2c nicht dargestellt) nutzbaren Diensten und/oder Anwendungen sind dazu vorteilhafterweise seitens des Endgerätes 1 und/oder seitens des Mobilfunknetzes 10 durch den Nutzer 8 und/oder dem Mobilfunknetzbetreiber eingestellt bzw. einstellbar, vorzugsweise nutzerindividuell.

Wie in Fig. 2d dargestellt, erfolgen nach der Authentifikation gemäß Verfahrensschritt C (vgl. Fig. 2c) in Verfahrensschritt D eine Erfassung von Steuereingaben repräsentierenden Signalen zur Positionierung und/oder Selektion der seitens der Anzeigeeinrichtung 2 des Endgerätes 1 wiedergegebenen Eingabemarkierung 5 mittels der Einrichtung 4 zur Erfassung biometrischen Informationen des Nutzers 8 des Endgerätes 1 und in Verfahrensschritt E eine Positionierung und/oder Selektion der seitens der Anzeigeeinrichtung 2 des Endgerätes 1 wiedergegebenen Eingabemarkierung 5 in Abhängigkeit von den mittels der Einrichtung 4 zur Erfassung biometrischer Informationen des Nutzers 8 des Endgerätes 1 erfassten Steuereingaben repräsentierenden Signale. Die Einrichtung 4 zur Erfassung biometrischer Informationen des Nutzers 8 des Endgerätes 1 ist dazu ausgebildet und/oder eingerichtet Bewegungen eines Fingers des Nutzer 8 im Bereich der Einrichtung 4 zur Erfassung biometrischer Informationen des Nutzers 8 des Endgerätes 1 zu erfassen und insbesondere eine sogenannte 4-Way Navigation Control und/oder dergleichen zu ermöglichen. Dabei wird die Eingabemarkierung 5 insbesondere entsprechend der aktuell erfassten Bewegungen des Fingers des Nutzers 8 des Endgerätes 1 auf der Anzeigeeinrichtung 2 bewegt.

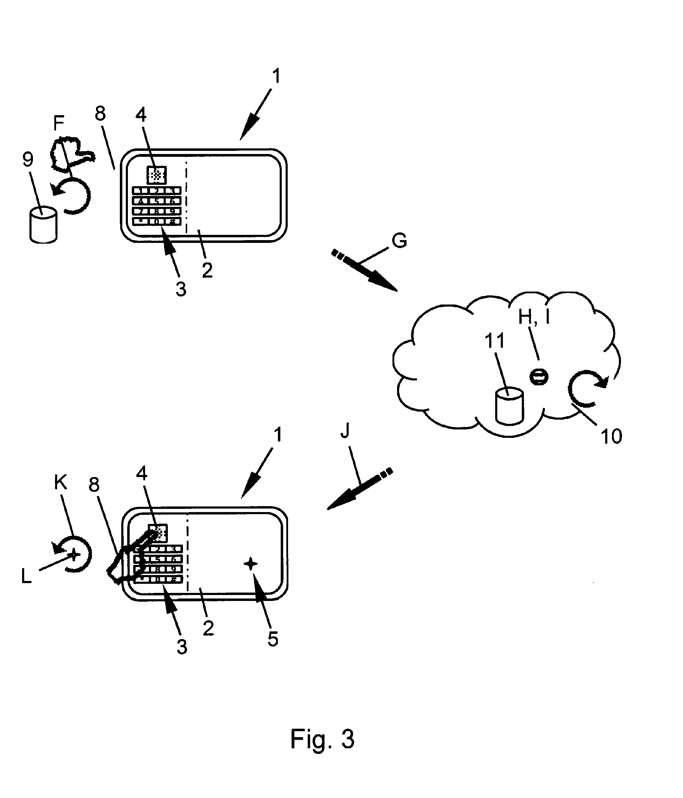

Fig. 3 zeigen ein Ausführungsbeispiel eines Verfahrens zum Betrieb eines Endgerätes 1 nach Fig. 1 in einem Mobilfunknetz 10 gemäß einem GSM-, GPRS , UMTS- und/oder LTE-Funknetzstandard.

In dem mit F gekennzeichneten Verfahrensschritt F werden seitens des Endgerätes 1 mittels der Einrichtung 4 zur Erfassung biometrischer Informationen eines Nutzers 8 des Endgerätes 1 biometrische Informationen, vorliegend wenigstens ein Fingerabdruck, des Nutzers 8 des Endgerätes 1 erfasst und in einer Speichereinrichtung bzw. Datenbank 9 des Endgerätes 1 gespeichert.

In dem mit G gekennzeichneten Verfahrensschritt G werden die in Verfahrensschritt A erfassten biometrischen Informationen des Nutzers 8 des Endgerätes 1 von dem Endgerät 1 über das Mobilfunknetz 10 an eine Einrichtung (in Fig. 3 nicht explizit dargestellt) des Mobilfunknetzes 10 gesendet und entsprechend von der Einrichtung des Mobilfunknetzes 10 empfangen.

In dem mit H gekennzeichneten Verfahrensschritt H erfolgt seitens der Einrichtung des Mobilfunknetzes 10 ein Vergleich der in Verfahrensschritt G aktuell empfangenen biometrischen Informationen mit in einer Speichereinrichtung bzw. Datenbank 11 des Mobilfunknetzes 10 oder der Einrichtung des Mobilfunknetzes 10 verwalteten biometrischen Informationen des Nutzer 8 des Endgerätes 1, welche der Nutzer 8 zu einem vorhergehenden Zeitpunkt seitens des Mobilfunknetzes 10 in der oder einer weiteren Speichereinrichtung bzw. Datenbank 11 des Mobilfunknetzes 10 erfasst bzw. hinterlegt hat.

Bei Übereinstimmung der aktuell in Verfahrensschritt G empfangenen biometrischen Informationen des Nutzers 8 des Endgerätes 1 mit der zuvor in der oder einer weiteren Speichereinrichtung bzw. Datenbank 11 des Mobilfunknetzes 10 erfassten bzw. hinterlegten biometrischen Information des Nutzer 8 des Endgerätes 1 erfolgt in Verfahrensschritt I eine Authentifikation von Nutzungen von Funktionen und/oder Anwendungen des Endgerätes 1 und/oder von mit dem Endgerät 1 über das Mobilfunknetz 10 nutzbaren Diensten und/oder Anwendungen.

Eine bei Übereinstimmung der aktuell empfangenen biometrischen Informationen des Nutzers 8 des Endgerätes 1 mit zuvor erfassten bzw. hinterlegten biometrischen Informationen des Nutzers 8 des Endgerätes 1 gegebene positive Authentifikation ist in Fig. 3 symbolisch durch einen sogenannten Smiley dargestellt. Die Authentifikation bewirkt eine Freigabe von Nutzungen von Funktionen und/oder Anwendungen des Endgerätes 1 und/oder von mit dem Endgerät 1 über das Mobilfunknetz 10 nutzbaren Diensten und/oder Anwendungen. In dem mit J gekennzeichneten Verfahrensschritt J sendet die Einrichtung (in Fig. 3 nicht explizit dargestellt) des Mobilfunknetzes 10 über das Mobilfunknetz 10 entsprechende Authentifikationsinformationen bzw. Freigaben an das mobile Endgerät 1.

Die Freigabe ist in Fig. 3 symbolisch durch die dann in bzw. auf der Anzeigeeinrichtung 2 des Endgerätes 1 wiedergegebene Eingabemarkierung 5 dargestellt. Die durch Authentifikation freizugebenden Nutzungen von Funktionen und/oder Anwendungen des Endgerätes 1 und/oder die durch Authentifikation freizugebenden mit dem Endgerät 1 über das Mobilfunknetz 10 nutzbaren Diensten und/oder Anwendungen sind dazu vorteilhafterweise seitens des Endgerätes 1 und/oder seitens des Mobilfunknetzes 10 durch den Nutzer 8 und/oder dem Mobilfunknetzbetreiber eingestellt bzw. einstellbar, vorzugsweise nutzerindividuell.

Wie in Fig. 3 dargestellt, erfolgen nach der Authentifikation gemäß Verfahrensschritt I in Verfahrensschritt K eine Erfassung von Steuereingaben repräsentierenden Signalen zur Positionierung und/oder Selektion der seitens der Anzeigeeinrichtung 2 des Endgerätes 1 wiedergegebenen Eingabemarkierung 5 mittels der Einrichtung 4 zur Erfassung biometrischen Informationen des Nutzers 8 des Endgerätes 1 und in Verfahrensschritt L eine Positionierung und/oder Selektion der seitens der Anzeigeeinrichtung 2 des Endgerätes 1 wiedergegebenen Eingabemarkierung 5 in Abhängigkeit von den mittels der Einrichtung 4 zur Erfassung biometrischer Informationen des Nutzers 8 des Endgerätes 1 erfassten Steuereingaben repräsentierenden Signale. Die Einrichtung 4 zur Erfassung biometrischer Informationen des Nutzers 8 des Endgerätes 1 ist dazu ausgebildet und/oder eingerichtet Bewegungen eines Fingers des Nutzer 8 im Bereich der Einrichtung 4 zur Erfassung biometrischer Informationen des Nutzers 8 des Endgerätes 1 zu erfassen und insbesondere eine sogenannte 4-Way Navigation Control und/oder dergleichen zu ermöglichen. Dabei wird die Eingabemarkierung 5 insbesondere entsprechend der aktuell erfassten Bewegungen des Fingers des Nutzers 8 des Endgerätes 1 auf der Anzeigeeinrichtung 2 bewegt.

Die in den Figuren der Zeichnung dargestellten und beschriebenen Ausführungsbeispiele der Erfindung dienen lediglich der Erläuterung der Erfindung und sind für diese nicht beschränkend.

### Bezugszeichenliste:

- 1: mobiles Endgerät/Mobilfunktelefon
- 2: Anzeigeeinrichtung/Touchscreen (Endgerät (1))
- 3: Eingabeeinrichtung/Touchscreen (Endgerät (1))
- 4: Einrichtung zur Erfassung biometrischer Informationen/Fingerabdruckscanner(Endgerät (1))
- 5: Eingabemarkierung/Cursor
- 6: Anzeigebereich
- 7: Eingabebereich
- 8: Nutzer
- 9: Speichereinrichtung/Datenbank (Endgerät (1))
- 10: Mobilfunknetz
- 11: Speichereinrichtung/Datenbank (Mobilfunknetz (10))
- A: Verfahrensschritt Erfassung biometrischer Informationen (Nutzer (8)
- B: Verfahrensschritt Vergleich biometrischer Informationen
- C: Verfahrensschritt Authentifikation von Nutzungen von Funktionen und/oder Anwendungen (Endgerät (1))
- D: Verfahrensschritt Erfassung Steuereingaben
- E: Verfahrensschritt Positionierung und/oder Selektion Eingabemarkierung (5)
- F: Verfahrensschritt Erfassung biometrischer Informationen (Nutzer (8)
- G: Verfahrensschritt Sendung/Empfang biometrischer Informationen
- H: Verfahrensschritt Vergleich biometrischer Informationen
- I: Verfahrensschritt Authentifikation von Nutzungen von Funktionen und/oder Anwendungen (Endgerät (1))
- J: Verfahrensschritt Sendung und Freigabe Authentifikation von Nutzungen von Funktionen und/oder Anwendungen (Endgerät (1))
- K: Verfahrensschritt Erfassung Steuereingaben
- L: Verfahrensschritt Positionierung und/oder Selektion Eingabemarkierung (5)

## Patentansprüche

1. Endgerät (1) zur Nutzung in einem Mobilfunknetz (10),
insbesondere gemäß einem GSM-, GPRS-, UMTS- und/oder LTE-Funknetzstandard,
mit
einer Anzeigeeinrichtung (2) zur optischen, akustischen und/oder mechanischen Wiedergabe von Informationen repräsentierenden Signalen,
einer Eingabeeinrichtung (3) mit Eingabemitteln zur optischen, akustischen und/oder mechanischen Erfassung von Informationen und/oder Steuereingaben repräsentierenden Signalen durch Betätigung wenigstens eines der Eingabemittel
und
einer Einrichtung (4) zur Erfassung wenigstens einer biometrischen Information eines Nutzers (8) des Endgerätes (1),
**dadurch gekennzeichnet, dass**
die Einrichtung (4) zur Erfassung der wenigstens einen biometrischen Information eines Nutzers (8) des Endgerätes (1)
zur Authentifikation von Nutzungen
von Funktionen und/oder Anwendungen des Endgerätes (1) und/oder
von mit dem Endgerät (1) über ein Mobilfunknetz (10) nutzbaren Diensten und/oder Anwendungen
nutzbar ist
und
von der Eingabeeinrichtung (3) als Eingabemittel zur Erfassung von Steuereingaben repräsentierenden Signalen nutzbar ist.

2. Endgerät (1) nach Anspruch 1, **dadurch gekennzeichnet, dass** die Einrichtung (4) zur Erfassung der wenigstens einen biometrischen Information eines Nutzers des Endgerätes (1) von der Eingabeeinrichtung (3) als Eingabemittel zur Erfassung von Steuereingaben repräsentierenden Signalen zur Positionierung und/oder Selektion einer seitens der Anzeigeeinrichtung (2) wiedergegebenen Eingabemarkierung (5) nutzbar ist.

3. Endgerät (1) nach Anspruch 1 oder Anspruch 2, **dadurch gekennzeichnet, dass** die Einrichtung (4) zur Erfassung der wenigstens einen biometrischen Information eines Nutzers (8) des Endgerätes (1) ein Scanner zur Erfassung von Fingerabdrücken, Handgeometrien, Gesichtsgeometrien und/oder Iris ist.

4. Endgerät (1) nach einem der Ansprüche 1 bis 3, **dadurch gekennzeichnet, dass** die Eingabeeinrichtung (3) ein eine berührungssensitive Fläche bereitstellendes Tastfeld (Touchscreen) als Eingabemittel zur Erfassung von Informationen und/oder Steuereingaben repräsentierenden Signalen aufweist oder ist.

5. Endgerät (1) nach einem der Ansprüche 1 bis 4, **dadurch gekennzeichnet, dass** die Eingabeeinrichtung (3) ein eine optisch berührungssensitive Fläche bereitstellendes Tastfeld (Optical Touchpad, optischer Mauszeiger) als Eingabemittel zur Erfassung von Informationen und/oder Steuereingaben repräsentierenden Signalen aufweist oder ist.

6. Endgerät (1) nach Anspruch 4 oder Anspruch 5, **dadurch gekennzeichnet, dass** die Einrichtung (4) zur Erfassung der wenigstens einen biometrischen Information eines Nutzers (8) des Endgerätes (1) in der berührungssensitiven bzw. in der optisch berührungssensitiven Fläche des Tastfeldes integriert ist.

7. Endgerät (1) nach Anspruch 4 oder Anspruch 5, **dadurch gekennzeichnet, dass** die Einrichtung (4) zur Erfassung der wenigstens einen biometrischen Information eines Nutzers (8) des Endgerätes (1) von der berührungssensitiven bzw. von der optisch berührungssensitiven Fläche des Tastfeldes ausgebildet oder bereitgestellt ist.

8. Endgerät (1) nach einem der Ansprüche 1 bis 7, **dadurch gekennzeichnet, dass** dieses ein mobiles Endgerät (1), vorzugsweise ein Mobilfunktelefon (1), ist.

9. Verfahren zum Betrieb eines in einem Mobilfunknetz (10) nutzbaren Endgerätes (1) mit den Merkmalen nach einem der Ansprüche 1 bis 8, **gekennzeichnet durch** die folgenden Verfahrensschritte:
- Erfassung wenigstens einer biometrischen Information eines Nutzers (8) des Endgerätes (1) mittels der Einrichtung (4) zur Erfassung wenigstens einer biometrischen Information eines Nutzers (8) des Endgerätes (1);
- Vergleich der wenigstens einen mittels der Einrichtung (4) zur Erfassung wenigstens einer biometrischen Information eines Nutzers (8) des Endgerätes (1) erfassten biometrischen Information des Nutzers (8) des Endgerätes (1) mit in wenigstens einer Datenbank verwalteten biometrischen Informationen von wenigstens einem Nutzer (8) des Endgerätes (1);
- Authentifikation von Nutzungen von Funktionen und/oder Anwendungen des Endgerätes (1) und/oder von mit dem Endgerät (1) über das Mobilfunknetz (10) nutzbaren Diensten und/oder Anwendungen bei Übereinstimmung der wenigstens einen mittels der Einrichtung (4) zur Erfassung wenigstens einer biometrischen Information eines Nutzers (8) des Endgerätes (1) erfassten biometrischen Information des Nutzers (8) des Endgerätes (1) mit wenigstens einer in der Datenbank verwalteten biometrischen Information von wenigstens einem Nutzer (8) des Endgerätes (1);
- Erfassung von Steuereingaben repräsentierenden Signalen zur Positionierung und/oder Selektion einer seitens der Anzeigeeinrichtung (2) des Endgerätes (1) wiedergegebenen Eingabemarkierung (5) mittels der Einrichtung (4) zur Erfassung wenigstens einer biometrischen Information eines Nutzers (8) des Endgerätes (1); und
- Positionierung und/oder Selektion der seitens der Anzeigeeinrichtung des Endgerätes wiedergegebenen Eingabemarkierung in Abhängigkeit von den mittels der Einrichtung zur Erfassung wenigstens einer biometrischen Information eines Nutzers des Endgerätes erfassten Steuereingaben repräsentierenden Signale.

10. Verfahren zum Betrieb eines in einem Mobilfunknetz (10) nutzbaren Endgerätes (1) mit den Merkmalen nach einem der Ansprüche 1 bis 8, **gekennzeichnet durch** die folgenden Verfahrensschritte:
- Erfassung wenigstens einer biometrischen Information eines Nutzers (8) des Endgerätes (1) mittels der Einrichtung (4) zur Erfassung wenigstens einer biometrischen Information eines Nutzers (8) des Endgerätes (1);
- Sendung der wenigstens einen mittels der Einrichtung (4) zur Erfassung wenigstens einer biometrischen Information eines Nutzers (8) des Endgerätes (1) erfassten biometrischen Information des Nutzers (8) des Endgerätes (1) von dem Endgerät (1) an das Mobilfunknetz (10);
- Empfang der wenigstens einen von dem Endgerät (1) an das Mobilfunknetz (10) gesendeten erfassten biometrischen Information des Nutzers (8) des Endgerätes (1) seitens des Mobilfunknetzes (10);
- Vergleich der wenigstens einen empfangenen biometrischen Information des Nutzers (8) des Endgerätes (1) mit in wenigstens einer Datenbank (11) des Mobilfunknetzes (10) oder einer über das Mobilfunknetz (10) erreichbaren Datenbank verwalteten biometrischen Informationen von wenigstens einem Nutzer (8) wenigstens eines Endgerätes (1);
- Authentifikation von Nutzungen von mit dem Endgerät (1) über das Mobilfunknetz (10) nutzbaren Diensten und/oder Anwendungen bei Übereinstimmung der wenigstens einen empfangenen biometrischen Information des Nutzers (8) des Endgerätes (1) mit wenigstens einer in der Datenbank verwalteten biometrischen Information von wenigstens einem Nutzer (8) wenigstens eines Endgerätes (1);
- Erfassung von Steuereingaben repräsentierenden Signalen zur Positionierung und/oder Selektion einer seitens der Anzeigeeinrichtung (2) des Endgerätes (1) wiedergegebenen Eingabemarkierung (5) mittels der Einrichtung (4) zur Erfassung wenigstens einer biometrischen Information eines Nutzers (8) des Endgerätes (1); und
- Positionierung und/oder Selektion der seitens der Anzeigeeinrichtung (2) des Endgerätes (1) wiedergegebenen Eingabemarkierung (5) in Abhängigkeit von den mittels der Einrichtung (4) zur Erfassung wenigstens einer biometrischen Information eines Nutzers (8) des Endgerätes (1) erfassten Steuereingaben repräsentierenden Signale.

11. Verfahren nach Anspruch 9 oder Anspruch 10, **gekennzeichnet durch** eine Identifikation des Nutzers (8) des Endgerätes (1) gegenüber dem Mobilfunknetz (10) für einen Zugang zum Mobilfunknetz (10), **durch** einen Zugang zu bzw. Zugriff auf Funktionen und/oder Anwendungen des Endgerätes (1), und/oder **durch** einen Zugang zu bzw. Zugriff auf von mit dem Endgerät (1) über das Mobilfunknetz (10) nutzbaren Diensten und/oder Anwendungen als zu authentifizierende Nutzungen.

12. Verfahren nach Anspruch 11, **gekennzeichnet durch** einen Zugang zu bzw. Zugriff auf soziale Netzwerk-, E-Mail- und/oder sonstige Internet-Dienste als von mit dem Endgerät (1) über das Mobilfunknetz (10) nutzbaren Dienst bzw. nutzbare Anwendung.

13. Verfahren nach Anspruch 11, **gekennzeichnet durch** einen Zugang zu bzw. Zugriff auf seitens des Endgerätes (1) gespeicherten persönlichen, vertraulichen und/oder geheim zu haltenden Informationen und/oder Daten des Nutzers (8) des Endgerätes (1) als Funktionen und/oder Anwendungen des Endgerätes (1).

14. Verfahren nach einem der Ansprüche 9 bis 13, **dadurch gekennzeichnet, dass** dieses zur Authentifikation des Nutzers (8) des Endgerätes (1) eingesetzt wird.
